# EUROPÄISCHE PATENTSCHRIFT

(11) **EP 0 452 696 B1**
(45) Veröffentlichungstag und Bekanntmachung des Hinweises auf die Patenterteilung: **18.01.1995**
(21) Anmeldenummer: 91104487.3
(22) Anmeldetag: 22.03.1991
(51) Int. Cl.: C08F 8/30, C08F 8/44, C08F 8/32

(54) **Wässrige Lösungen oder Dispersionen von hydroxyfunktionellen Copolymerisaten, ein Verfahren zu ihrer Herstellung und ihrer Verwendung**
Aqueous solutions or dispersions of hydroxy-functionalized copolymers, process for their manufacture and use thereof
Solutions et dispersions aqueuses de copolymères hydroxy-fonctionnalisés, leur procédé de préparation et leur application

(30) Priorität: 04.04.1990 DE 4010794
(43) Veröffentlichungstag der Anmeldung: 23.10.1991
(73) Patentinhaber: BAYER AG, 51368 Leverkusen (DE)
(72) Erfinder: Blum, Harald, Dr., W-4175 Wachtendonk (DE); Schneider, Volker, Dr., W-4175 Wachtendonk (DE); Höhlein, Peter, Dr., W-4152 Kempen 3 (DE)

(56) Entgegenhaltungen:
- EP-A- 0 112 195
- EP-A- 0 129 689
- EP-A- 0 416 360
- DE-A- 1 745 954
- FR-A- 2 271 132
- US-A- 2 985 625

## Beschreibung

Die Erfindung betrifft wäßrige Lösungen oder Dispersionen von hydroxyfunktionellen Copolymerisaten mit Imidstruktureinheiten, ein Verfahren zu ihrer Herstellung und ihre Verwendung zur Herstellung von Beschichtungsmitteln, Dichtmassen oder Klebstoffen.

Bindemittel auf Basis von organisch gelösten Acrylatcopolymerisaten zeichnen sich in Kombination mit Vernetzerharzen durch eine Reihe hervorragender Eigenschaften aus wie z.B. Hydrolyse- und Wetterbeständigkeit, Vergilbungsresistenz und Glanzhaltung. Durch den Einbau von Hydroxylgruppen erhält man lacktechnisch wertvolle Substanzen, die in großen Mengen für Lacke, Beschichtungen, Klebstoffe, Druckfarben und Dichtmassen eingesetzt werden.

Zur Einführung von Hydroxygruppen werden üblicherweise hydroxyfunktionelle Monomere wie z.B. Hydroxyethylacrylsäureester eingebaut. Zur Erzielung hoher Vernetzungsdichten müssen relativ große Mengen hydroxyfunktioneller Monomere eingebaut werden, wodurch die Variationsbreite der übrigen Monomeren eingeschränkt wird und außerdem relativ teure Produkte erhalten werden.

Polyimide können z.B. aus Bisanhydriden wie Pyromellithsäureanhydrid und aus Diaminen hergestellt werden. Sie zeichnen sich unter anderem durch hervorragende elektrische Isoliereigenschaften und hohe Thermostabilität bei Dauerbelastung aus. Ein gravierender Nachteil der technisch verwendbaren Polyimide ist ihre schlechte Löslichkeit. Es sind große Mengen an physiologisch nicht unbedenklichen Lösemitteln wie z.B. Dimethylacetamid erforderlich.

Durch die verwendeten Lösungsmittel kann die Wirtschaftlichkeit der aus den Bindemitteln hergestellten Beschichtungssysteme erheblich beeinträchtigt werden, da die Lösungsmittel nicht mit in die Überzüge eingebaut werden, sondern zusätzlich z.B. durch eine Nachverbrennung beseitigt werden müssen, um die Belastung der Umwelt soweit wie möglich zu verringern.

Wäßrige Anstrichsysteme auf Basis von wasserverdünnbaren bzw. -löslichen Bindemitteln haben demgegenüber den Vorteil, daß sie relativ geringe Mengen organischer Lösemittel enthalten und somit keine aufwendigen Absorptions- oder Verbrennungsanlagen erfordern.

Aufgabe der Erfindung war die Bereitstellung von hydroxyfunktionellen Copolymerisaten mit Imidstruktureinheiten in in Wasser gelöster oder dispergierter Form, die einfach herstellbar und aufgrund einer innerhalb weiter Grenzen variablen Zusammensetzung für vielfältige Anwendungsbereiche, z.B. in oder als wäßrige Beschichtungsmittel, Dichtmassen oder Klebstoffe geeignet sind.

Die Aufgabe konnte überraschenderweise dadurch gelöst werden, daß spezielle anhydrid- und gegebenenfalls carboxylfunktionelle Copolymerisate durch Reaktion mit geeigneten Aminoalkoholen und gegebenenfalls Aminocarbonsäuren zu nichtvernetzten, nach mindestens teilweiser Neutralisation der Carboxylgruppen wasserverdünnbaren, hydroxyfunktionellen Copolymerisaten mit Imidstruktureinheiten modifiziert und so in Wasser gelöst oder dispergiert werden.

Dies ist überraschend, da anhydridfunktionelle Copolymere bekanntlich mit Aminoalkoholen zu vernetzten, unlöslichen Produkten abreagieren. Die Vernetzung wird dadurch verursacht, daß Anhydride sehr schnell mit Amino- und auch mit Hydroxygruppen unter Ausbildung von Amid- bzw. Esterbindungen abreagieren.

Dieses Reaktionsprinzip wird z.B. in der EP-A-48128 beschrieben, um 2-Komponentenbindemittel herzustellen, die nach dem Vermischen der Einzel-Komponente rasch zu vernetzten Produkten aushärten.

Imidstruktureinheiten aufweisende Copolymerisate sind zwar aus der DE-A-1 745 954 bereits bekannt, jedoch handelt es sich bei den dort beschriebenen Umsetzungsprodukten von (i) Styrol-Maleinsäureanhydrid-Cotelomeren mit (ii) Ethanolamin nicht um wasserverdünnbare Verbindungen der Art der erfindungsgemäßen hydroxyfunktionellen Copolymerisate, auch fehlt in der Vorveröffentlichung jeglicher Hinweis auf die Herstellung bzw. Eigenschaften derartiger Copolymerisate.

Die EP-A-0 129 689 beschreibt ihrerseits Hydroxylgruppen-freie Modifizierungsprodukte von Maleinsäureanhydrid-Copolymerisaten, die über Ester- und Imidgruppen gebundene langkettige Kohlenwasserstoffreste aufweisen und also Wirkstoff für Papierleimungsmittel empfohlen werden. Aus Wasser verarbeitbare und mit Vernetzerharzen vernetzbare wäßrige Bindemittel der Art der erfindungsgemäßen wäßrigen Lösungen oder Dispersionen werden auch in dieser Vorveröffentlichung auch nicht andeutungsweise angesprochen.

Die ältere, nicht vorveröffentlichte EP-A-0 416 360 betrifft sekundäre Aminogruppen aufweisende Modifizierungsprodukte von Maleinsäureanhydrid-Copolymerisaten, die weder Carboxyl- bzw. Carboxylatgruppen aufweisen noch wasserverdünnbar sind.

Gegenstand der Erfindung sind wäßrige Lösungen oder Dispersionen von hydroxyfunktionellen Copolymerisaten mit Imidstruktureinheiten, dadurch gekennzeichnet, daß in den Copolymerisaten pro 100 Gew.-Teilen
a) 1 - 70 Gew.-Teile an chemisch eingebauten Struktureinheiten I 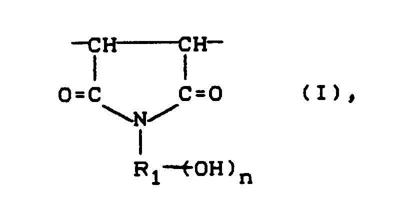
b) insgesamt 2 - 25 Gew.-Teile an chemisch eingebauten, zumindest teilweise in neutralisierter Form vorliegenden Struktureinheiten II und/ oder III und/oder IV und/oder V 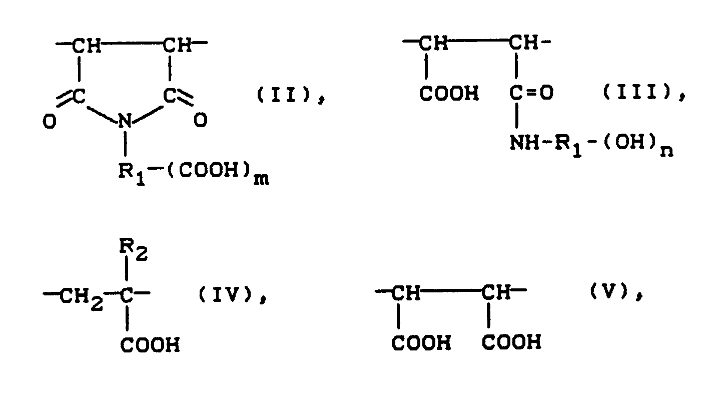
c) 1 - 75 Gew.-Teile an chemisch eingebauten Struktureinheiten der Formel (VI) 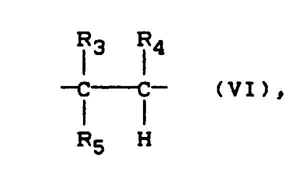 sowie
d) 15 - 95 Gew.-Teile an chemisch eingebauten Struktureinheiten (VII) 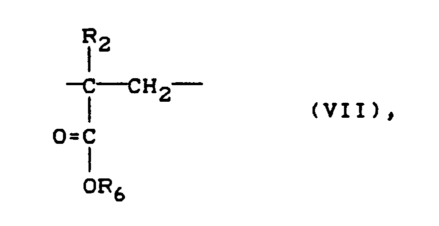
e) 0 - 15, vorzugsweise 0 bis 5 Gew.-Teilen an anderen, von mehrfach olefinisch ungesättigten Monomeren herrührenden Struktureinheiten
   vorliegen, wobei die Summe der genannten Gewichtsteile 100 beträgt, und wobei
   - n: für 1, 2 oder 3 steht,
   - m: für 1 oder 2 steht,
   - R₁: für aliphatische, cycloaliphatische, araliphatische, aromatische Kohlenwasserstoffreste mit 2 bis 20 Kohlenstoffatomen steht, die ein oder mehrere Heteroatome aus der Gruppe bestehend aus Sauerstoff und Stickstoff in Form von z.B. Ether-, Ester-, Amid-, Imid-, Urethan-, Harnstoff-, Keto-, Nitrilgruppen und darüber hinaus auch Fluor und Chlor enthalten können,
   - R₂: für Wasserstoff oder eine Methylgruppe steht,
   - R₃: für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest von 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen steht, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält,
   - R₄: für Wasserstoff, oder zusammen mit R₃ und den beiden C-Atomen der Struktureinheiten VI für einen cycloaliphatischen Rest steht,
   - R₅: für Wasserstoff, eine Methyl- oder Ethylgruppe oder für Chlor oder Fluor steht,
   - R₆: für einen aliphatischen oder cycloaliphatischen gegebenenfalls Sauerstoff, Schwefel oder Stickstoff als Heteroatom enthaltenden Kohlenwasserstoffrest mit 1 bis 18 Kohlenstoffatomen steht.

Gegenstand der Erfindung ist auch ein Verfahren zur Herstellung dieser wäßrigen Lösungen oder Dispersionen von hydroxyfunktionellen Copolymerisaten mit Imidstruktureinheiten, welches dadurch gekennzeichnet ist, daß man den hydroxyfunktionellen Copolymerisaten entsprechende, anhydrid- und gegebenenfalls carboxylfunktionelle Copolymerisate mit Aminoalkoholen der Formel VIII

H₂N-R₁-(OH)ₙ (VIII),

und gegebenenfalls mit Aminocarbonsäuren der Formel IX

H₂N-R₁(COOH)ₘ (IX),

wobei R₁, n und m die oben genannte Bedeutung haben,
unter Einhaltung eines Äquivalentverhältnisses von Aminogruppen zur Anhydridgruppen von 0,8:1 bis 2:1 unter Imidbildung bei 100 bis 200°C zur Reaktion bringt, gleichzeitig und/oder anschließend das Reaktionswasser azeotrop abdestilliert, die Polymerlösung nach und/oder unter gleichzeitiger, mindestens teilweiser Neutralisation der Carboxylgruppen in Wasser löst oder dispergiert und dann gegebenenfalls noch vorliegendes organisches Lösungsmittel teilweise oder ganz azeotrop abdestilliert.

Gegenstand der Erfindung ist auch eine weitere Ausbildung dieses Verfahrens, welche dadurch gekennzeichnet ist, daß man die durch Umsetzung der anhydrid- und gegebenenfalls carboxylfunktionellen Copolymerisate mit den Aminoalkoholen und gegebenenfalls Aminocarbonsäuren erhaltenen hydroxyfunktionellen Polyimidcopolymerisate vor dem Lösen oder Dispergieren durch Umsetzung mit 0,05 bis 5 Mol an Lactonen pro Mol an in den Polyimidcopolymerisaten vorliegenden Hydroxylgruppen unter ringöffnender Esterbildung modifiziert.

Gegenstand der Erfindung ist insbesondere auch eine bevorzugte Ausführungsform des erfindungsgemäßen Verfahrens, welche dadurch gekennzeichnet ist, daß man Aminoalkohole VIII mit einem Molekulargewicht von mindestens 61 sowie gegebenenfalls Aminocarbonsäuren IX zusammen mit Lösungsmittel vorlegt, auf Temperaturen von mindestens 100°C erhitzt, das gelöste anhydrid- und gegebenenfalls carboxylfunkionelle Copolymerisat zudosiert, das Reaktionswasser abdestilliert bis das Produkt eine Säurezahl von 20 bis 75 aufweist, dann das Reaktionsgemisch in einem Wasser-/Neutralisationsmittelgemisch dispergiert und das organische Lösemittel azeotrop abdestilliert.

Gegenstand der Erfindung ist schließlich auch die Verwendung der erfindungsgemäßen wäßrigen Lösungen oder Dispersionen zur Herstellung von Beschichtungsmitteln, Dichtmassen oder Klebstoffen.

In den bevorzugten erfindungsgemäßen Lösungen bzw. Dispersionen liegen solche hydroxyfunktionelle Copolymerisate vor, in denen pro 100 Gew.-Teilen
a) 8 - 35 Gew.-Teile an chemisch eingebauten Struktureinheiten I
b) insgesamt 3 - 15 Gew.-Teile an chemisch eingebauten, zumindest teilweise in neutralisierter Form vorliegenden Struktureinheiten II und/oder III und/oder IV und/oder V,
c) 5 - 50 Gew.-Teile an chemisch eingebauten Struktureinheiten VI sowie
d) 20 - 80 Gew.-Teile an chemisch eingebauten Struktureinheiten VII
   vorliegen, wobei die Summe dieser Gewichtsteile 100 ergibt und wobei
   - n: für 1, 2 oder 3 steht,
   - m: für 1 steht,
   - R₁: für einen aliphatischen, gegebenenfalls Estergruppen aufweisenden Kohlenwasserstoffrest mit insgesamt 2 bis 12 Kohlenstoffatomen steht,
   - R₂: für Wasserstoff oder eine Methylgruppe steht,
   - R₃: für einen gegebenenfalls substituierten Phenylrest steht,
   - R₄: für Wasserstoff steht,
   - R₅: für Wasserstoff oder eine Methylgruppe steht,
   - R₆: für einen aliphatischen, gegebenenfalls Sauerstoff als Heteroatom enthaltenden Kohlenwasserstoffrest mit 1 bis 10 Kohlenstoffatomen steht.

Unter den bevorzugten erfindungsgemäßen Lösungen oder Dispersionen sind jene besonders bevorzugt, deren hydroxyfunktionelle Copolymerisate pro 100 Gew.-Teilen
a) 8 - 35 Gew.-Teile an chemisch eingebauten Struktureinheiten der Formel Ia 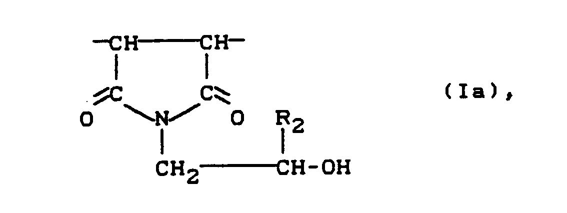
b) 3 - 15 Gew.-Teile an chemisch eingebauten, zumindest teilweise in neutralisierter Form vorliegenden Struktureinheiten der Formeln IIa und/oder IV 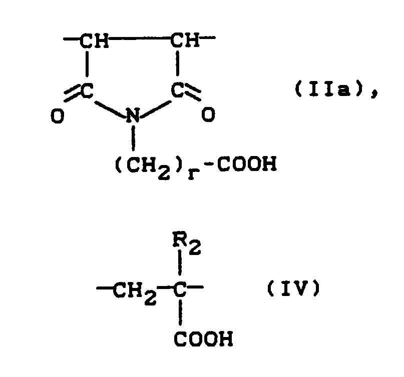
c) 5 - 50 Gew.- Teile an chemisch eingebauten Struktureinheiten VIa 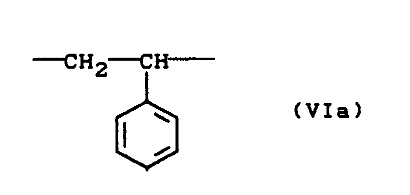 sowie
d) 20 - 80 Gew.-Teile an chemisch eingebauten Struktureinheiten der oben genannten Formel VII vorliegen, wobei
   - R₂ und R₆: die zuletzt genannte Bedeutung haben und
   - r: für eine ganze Zahl von 2 bis 12 steht.

Die in den erfindungsgemäßen Lösungen oder Dispersionen vorliegenden hydroxyfunktionellen Copolymerisate weisen im allgemeinen ein als Zahlenmittel bestimmtes, nach der Gelpermeationschromatographie mittels geeichter Polystyrole ermittelbares Molekulargewicht Mn von 500 bis 30.000, vorzugsweise 1.700 bis 15.000 und besonders bevorzugt von 2.600 bis 10.000 bei Säurezahlen von 15 bis 125, vorzugsweise von 20 bis 75 und einen Hydroxylgruppengehalt von 0,1 bis 25, vorzugsweise 0,5 bis 6 Gew.-% auf, Im allgemeinen liegen 10 bis 100 %, vorzugsweise 30 bis 80 % der chemisch eingebauten Carboxylgruppen in mit einer Base neutralisierter Form, d.h. als Carboxylatgruppen vor, Die gemachten Angaben bezüglich der Säurezahl beziehen sich sowohl auf unneutralisierte als auch auf neutralisierte Carboxylgruppen.

Die den hydroxyfunktionellen Copolymerisaten zugrundeliegenden anhydrid- und gegebenenfalls carboxylfunktionellen Copolymerisate weisen ein Molekulargewicht auf, welches dem genannten Molekulargewicht der hydroxyfunktionellen Copolymerisate abzüglich dem Molekulargewicht der bei der Durchführung des erfindungsgemäßen Verfahrens in die anhydridfunktionellen Copolymerisate eingebauten Ausgangsmaterialien entspricht. Das Anhydridäquivalentverhältnis der beim erfindungsgemäßen Verfahren als Ausgangsmaterialien einzusetzenden anhydridfunktionellen Copolymerisate (Menge in "g" die 1 Mol Anhydridgruppen enthält) liegt bei 196 - 9.800, vorzugsweise 245 bis 1.960. Die anhydrid- und gegebenenfalls carboxylfunktionellen Ausgangsmaterialien werden in an sich bekannter Weise durch eine radikalisch initiierte Copolymerisation, vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Die anhydridfunktionellen Copolymerisate werden im allgemeinen durch Copolymerisation folgender Monomerer hergestellt (die Angaben in "Gew.-Teilen" beziehen sich jeweils auf 100 Gew.-Teile Monomerengemisch, d.h. die Summe der Gewichtsteile ergibt jeweils 100):
a) 1 - 40, bevorzugt 3 - 18 Gew.-Teilen anhydridfunktioneller Monomere,
b) 1 - 75, bevorzugt 5 - 50 Gew.-Teile Monomere der Formel X 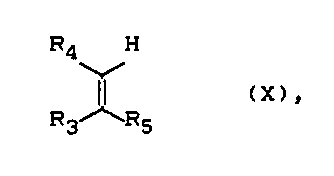
c) 15 - 95, bevorzugt 20 - 80 Gew.-Teile Monomere der Formel XI 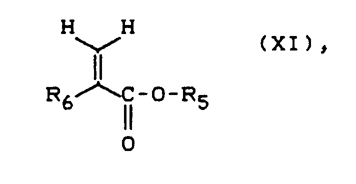
d) 0 - 15, bevorzugt 0 - 5 Gew.-Teile mehrfachfunktionelle Monomere, die 2 oder mehr copolymerisierbare, ungesättigte Bindungen enthalten,
e) 0 - 20, vorzugsweise 0 - 10 Gew.-Teile carboxylfunktionelle Monomere.

Geeignete bzw. bevorzugte Monomere a) sind Maleinsäureanhydrid, Itaconsäureanhydrid, Citraconsäureanhydrid, wobei Maleinsäureanhydrid besonders bevorzugt ist.

Geeignete bzw. bevorzugte Monomere b) sind z.B. Styrol, Vinyltoluol, α-Methylstyrol, α-Ethylstyrol, kernsubstituierte, gegebenenfalls Isomerengemische darstellende Diethylstyrole, Isopropylstyrole, Butylstyrole und Methoxystyrole, Ethylvinylether, n-Propylvinylether, Isopropylvinylether, n-Butylvinylether, Isobutylvinylether, Vinylacetat, Vinylpropionat, Vinylbutyrat, 1-Octen, 1-Decen, 1-Hexen, 2-Methyl-1-hepten, 2,4,4-Trimethyl-1-penten, 1-Nonen, 1-Dodecen, 1-Tridecen, 1-Tetradecen, Vinylcyclohexen, Cycloocten, Cyclohexen und beliebige Gemische dieser Monomeren, wobei Styrol besonders bevorzugt ist.

Geeignete bzw. bevorzugte Monomere c) sind Methylacrylat, Methylmethacrylat, Ethylacrylat, Ethylmethacrylat, n-Butylacrylat, n-Butylmethacrylat, iso-Butylacrylat, iso-Butylmethacrylat, tert.-Butylacrylat, tert.-Butylmethacrylat, 2-Ethylhexylacrylat, 2-Ethylhexylmethacrylat, Octylacrylat, Octylmethacrylat, Laurylacrylat, Laurylmethacrylat, Dodecylacrylat, Dodecylmethacrylat, Cyclohexylacrylat, Cyclohexylmethacrylat, Benzylacrylat, Benzylmethacrylat, 4-tert.-Butylcyclohexylacrylat, 4-tert.-Butylcyclohexylmethacrylat, 3-Cyclohexylpropyl-1-methacrylat, 3-Methoxybutylacrylat, 3-Methoxybutylmethacrylat, 2-Phenylethylacrylat, 2-Phenylethylmethacrylat, 2,2,3,3-Tetrafluorpropylmethacrylat, Tetrahydrofurfuryl-2-acrylat, Tetrahydrofurfuryl-2-methacrylat und beliebige Gemische dieser Monomeren, wobei Methylmethacrylat, n-Butylacrylat, Ethylacrylat, 2-Ethylhexylmethacrylat, n-Butylmethacrylat und 2-Ethylhexylacrylat besonders geeignet sind.

Geeignete bzw. bevorzugte Monomere d) sind z.B. Hexandiolbisacrylsäureester, Trimethylolpropantrisacrylsäureester, Pentaerythrittrisacrylsäureester, Neopentylglykolbisacrylsäureester, Divinylbenzol.

Geeignete bzw. bevorzugte Monomere e) sind z.B. Acrylsäure, Methacrylsäure oder Maleinsäure.

Geeignete Lösungsmittel zur Durchführung der Copolymerisation und des erfindungsgemäßen Verfahrens sind beispielsweise Ester wie Butylacetat, Isopropylacetat, Isobutylacetat, sec.-Butylacetat, Amylacetat, Hexylacetat, Ethylpropionat, Butylpropionat, Isobutylisobutyrat, Methylglykolacetat, Ethylglykolacetat, Butylglykolacetat, Ethoxypropylacetat, Ethyldiglykolacetat, Methyldiglykolacetat, Butyldiglykolacetat, Butyrolacton, Propylenglylkolmethyletheracetat, Oxohexylacetat, (®Exxate 600), Oxoheptylacetat (®Exxate 700), z.B. Ether wie Dibutylether, Dimethyldiglykol, Kohlenwasserstoffe wie Benzin, Terpentinöl, Solventnaphta, Terpene, Octan, Cyclohexan, Toluol, Xylol, Ethylbenzol, Ketone wie Aceton, Methylisobutylketon, Diethylketon, Cyclohexanon, Methylcyclohexanon oder beliebige Gemische derartiger Lösemittel.

Bevorzugt sind solche Lösemittel, deren Siedepunkt bei Normalbedingungen ≧ 110°C beträgt und solche Lösemittel, die mit Wasser ein Azeotrop bilden wie z.B. Xylol, Butylacetat, Solvent Naphta, Oxohexylacetat.

Die Copolymerisation wird üblicherweise bei Festgehalten von 30 bis 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 % beendet, Gegebenenfalls ist es erforderlich durch nachträgliche Zugabe von geringen Initiatormengen eine Nachaktivierung vorzunehmen, um den gewünschten Monomerenumsatz zu erreichen, Bei bestimmten Monomerausgangszusammensetzungen ist es möglich, daß nach der Polymerisation größere Mengen an Restmonomeren im Copolymerisat enthalten sind, Aus Kostengründen und für den Fall, daß sich dies auf den gewünschten Anwendungszweck bzw. auf das Eigenschaftsniveau störend auswirken sollte, ist es vorteilhaft, diesen Restmonomerengehalt entweder durch Destillation oder durch Nachaktivieren mit Initiator zu reduzieren.

Es ist auch möglich, einen Teil der anhydridfunktionellen Monomeren mit dem Lösungsmittel vorzulegen, oder das anhydridfunktionelle Monomer schneller als die anderen Monomeren zuzutropfen. Diese geänderten Herstellverfahren können in gewissen Fällen die Verträglichkeit bzw. andere Eigenschaften der Bindemittel verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für die bei der Polymerisationsreaktion im allgemeinen eingehaltenen Reaktionstemperaturen von 60 bis 180° C geeignet sind, wie organische Peroxide, z.B.: Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid wie Azoverbindungen z,B, 2,2'-Azobis-(2,4-dimethylvaleronitril), 2,2'-Azobis-(isobutyronitril), 2,2'-Azobis-(2,3-dimethylbutyronitril), 1,1'-Azobis-(1-cyclohexannitril).

Die Initiatoren können in Mengen von 1 bis 10 Gew.-%, bezogen auf Gesamtmonomere, eingesetzt werden, Gegebenenfalls können molekulargewichtsregelnde Substanzen, wie n-Dodecylmercaptan, tert.-Dodecylmercaptan usw. in Mengen von 0 bis 5 Gew.-% eingesetzt werden.

Ein erfindungswesentlicher Punkt besteht nun darin, die in den Copolymerisaten vorliegenden Anhydridgruppen in Imidgruppen zu überführen. Dies geschieht vorzugsweise in 25 bis 85 %iger organischer Lösung durch Umsetzung mit Aminoalkoholen der bereits oben genannten allgemeinen Formel VIII und gegegbenenfalls Aminocarbonsäuren der ebenfalls bereits oben genannten allgemeinen Formel IX.

Der Begriff " Aminoalkohole" soll im Rahmen der Erfindung auch Aminophenole (R₁ = aromatischer Kohlenwasserstoffrest). Die "Aminoalkohole" weisen ein berechnetes Molekulargewicht von 61 - 500 auf und enthalten neben einer primären Aminogruppe mindestens eine, vorzugsweise jedoch höchstens 3, besonders bevorzugt ebenfalls eine Hydroxylgruppe pro Molekül.

Geeignete Aminoalkohole sind z.B.: 2-Aminoethanol, 1-Aminoethanol, 3-Amino-1-propanol, 2-Amino-1-propanol, 1-Amino-2-propanol, 2-Amino-2-methyl-1-propanol, 2-Amino-2-methyl-1,3-propandiol, 2-Amino-2-hydroxymethyl-1,3-propandiol, 2-(2-Amino-ethoxy)ethanol, 2-Amino-1-butanol, 4-Amino-1-butanol, 1-Amino-2-butanol, 1-Amino-3-butanol, 3-Amino-1-butanol, 2-Amino-1-cyclohexanol, 3-Amino-1-cyclohexanol, 4-Amino-1-cyclohexanol, 2-Amino-1-(hydroxymethyl)cyclopentan, Galactosamin, 2-Amino-1-hexanol, 6-Amino-1-hexanol, 2-Amino-1-phenylethanol, 2-Amino-3-methyl-1-butanol, 1-(Aminomethyl)-cyclohexanol, Noradrenalin, 6-Amino-2-methyl-2-heptanol, Norphenylephedrin, Norpseudoephedrin, 2-Amino-3-methyl-1-pentanol, 2-Amino-4-methyl-1-pentanol, (5-Hydroxy-1,3,3-trimethyl-1-cyclohexylmethyl)-amin, 2-(Aminomethyl)-3,3,5-triethylcyclopentanol, 2-Amino-1-pentanol, 5-Amino-1-pentanol, 2-Amino-2-phenylethanol, 2-Amino-1-phenyl-1,3-propandiol, 2-Amino-1-phenyl-propanol-1, 2-Amino-3-phenyl-propanol-1, 1-Amino-2,3-propandiol, 2-Amino-1,3-propandiol, 2-Amino-1,3-propandiol, 3,4-Dihydroxynorephedrin, 4-Aminophenol, 2-(4-Aminophenoxy)ethanol, 4-Aminobenzylalkohol, 3-Aminobenzylalkohol, 2-Aminobenzylalkohol, 2-Amino-9-fluorenol, 1-Amino-3-hydroxypyridin, 2-Amino-1-(4-hydroxy-3-methoxyophenyl)-ethanol, 1-Amino-2-naphtol, 1-Amino-4-naphtol, 1-Amino-7-naphtol, 2-Amino-3-naphtol, 2-Amino-1-(4-nitrophenyl)-1,3-propandiol, 1-(3-Aminophenyl)-ethanol, 2-(2-Aminophenyl)-ethanol, 2-(4-Aminophenyl)-ethanol, 2-((3-Aminopropyl)-methyl-amino)-ethanol oder deren Gemische.

Die bevorzugten Aminoalkohole sind solche der oben genannten allgemeinen Formel VIII, für welche
- R₁: für einen aliphatischen Kohlenwasserstoffrest mit 2 bis 13 Kohlenstoffatomen steht und
- n: für eine ganze Zahl von 1 bis 3 steht.

Die besonders bevorzugten Aminoalkohole sind solche der allgemeinen Formel VIII, für welche
- R₁: für einen Ethylen- oder 1,2-Propylenrefit steht und
- n: für 1 steht, wobei die Hydroxylgruppe im Falle von R₁ = 1,2-Propylen mit dem sekundären Kohlenstoffatom verbunden ist.

Besonders bevorzugte Aminoalkohole sind demzufolge Aminoethanol und 1-Amino-2-propanol.

Bei der Durchführung des erfindungsgemäßen Verfahrens ohne Mitverwendung von Aminocarbonsäuren IX werden anhydridfunktionelle Copolymerisate und Aminoalkohole im allgemeinen in solchen Mengen eingesetzt, daß auf jede Anhydridgruppe 0,8 - 2,0, vorzugsweise 1,0 - 1,5 und besonders bevorzugt 1,0 - 1,1 Aminogruppen des Aminoalkohols entfallen.

Geeignete Lösungsmittel für die Imidisierungsreaktion sind z.B. die bei der Herstellung der anhydridfunktionellen Copolymerisate bevorzugt verwendeten Lösungsmittel.

Das erfindungsgemäße Verfahren kann beispielsweise so durchgeführt werden, daß man die Aminoalkohol-Komponente, gegebenenfalls zusammen mit geeigneten Lösemitteln vorgelegt, auf Temperaturen ≧ 100°C erhitzt und dann bei Temperaturen von 100 bis 200°C, bevorzugt bei 120 bis 148°C das gelöste anhydridfunktionelle Copolymerisat zudosiert. Dabei kann die Reaktionsführung so gewählt werden, daß parallel zur Zugabe des Polymerisats das Reaktionswasser am Wasserabscheider azeotrop abdestilliert wird. Nach einer Verfahrensvariante kann auch zunächst die ganze Menge anhydridfunktionelles Copolymerisat zugegeben und im Anschluß daran das Reaktionswasser abgespalten werden.

Die Wasserabspaltung wird bei 100 bis 200°C, bevorzugt bei 120 bis 148°C solange durchgeführt, bis entweder die theoretische Wassermenge abgespalten ist, oder kein Wasser mehr abgespalten wird.

Beim Vermischen von anhydridfunktionellen Copolymerisaten und Aminoalkoholen können in Abhängigkeit von den Reaktionsbedingungen hochviskose Zwischenprodukte entstehen, insbesondere dann, wenn anhydridfunktionelle Copolymerisate mit hohem Molekulargewicht und/oder hohem Anhydridäquivalentgewicht eingesetzt werden. In diesen Fällen kann es angebracht sein, durch geeignete Verfahrensvarianten, beispielsweise durch Arbeiten bei einer niedrigen Konzentration der Reaktionslösung, diesen Viskositätsanstieg unter Kontrolle zu halten. Im Verlaufe der Umsetzung fällt die Viskosität wieder auf niedrigeres Niveau ab.

Bei bestimmten Copolymerisaten und der Verwendung eines Überschusses an Aminoalkohol kann auch das anhyridfunktionelle Polymerisat vorgelegt und der Aminoalkohol zudosiert werden. Ob ein Copolymerisat dafür geeignet ist, muß durch einen Vorversuch geprüft werden, da bei diesen Verfahrensvarianten unter ungünstigen Bedingungen Gelteilchen gebildet werden können.

Nach Abschluß der Imidierungsreaktion kann, falls erforderlich, überschüssiger Aminoalkohol, bevorzugt azeotrop mit einem geeigneten Lösemittel, durch kurzes Andestillieren aus dem Endprodukt entfernt werden.

Bei der Imidierungsreaktion können z.B. zur Reduzierung von Verfärbungsreaktionen geringe Mengen an Stabilisatoren wie z.B. Triphenylphosphit, phosphorige Säure, Dicyclopentadien, Antracen, Isopren zugesetzt werden.

Die zur Erzielung der Wasserverdünnbarkeit erforderlichen Carboxylgruppen können auf unterschiedliche Art und Weise in das Polymer eingebaut bzw. erzeugt werden. Eine Möglichkeit besteht in der bereits oben angesprochenen Mitverwendung von carboxylfunktionellen Monomeren e) bei der Herstellung der anhydridfunktionellen Copolymerisate (Einbau von Struktureinheiten IV bzw. V). Eine weitere Möglichkeit besteht in einer hydrolytischen Ringöffnung eines Teils der im Copolymerisat vorliegenden Andridgruppen. Dies kann beispielsweise durch Umsetzung mit einer berechneten Menge an Wasser bei 60 bis 100°C, gegebenenfalls in Anwesenheit einer katalytischen Menge eines tertiären Amine (z.B. 0,01 - 0,3 Gew.-%) wie z.B. Triethylamin oder Triethylendiamin, erfolgen (Einbau von Struktureinheiten V). Eine weitere Möglichkeit besteht in der bereits oben angesprochenen Mitverwendung von Aminocarbonsäuren IX bei der Imidisierungsreaktion, wobei ein Teil der ursprünglichen Anhydridgruppen in Imid-Carboxylgruppen II überführt wird.

Geeignete Aminocarbonsäuren sind z.B. Aminoessigsäure, 2-Aminopropansäure, 3-Aminopropansäure, 4-Aminobutansäure, 5-Aminopentansäure, 6-Aminohexansäure, 5-Aminohexansäure, 8-Aminooctansäure, 10-Aminodecansäure, 4-Aminobenzoesäure, 1-Aminocyclohexancarbonsäure oder Mischungen dieser oder anderer Aminocarbonsäuren.

Zu den bevorzugten Aminocarbonsäuren IX gehören solche, für welche
- R₁: für einen aliphatischen, vorzugsweise linearen Kohlenwasserstoffrest mit 2 - 12 Kohlenstoffatomen steht und
- m: 1 oder 2, vorzugsweise 1, bedeutet.

Demzufolge gehören die beispielhaft genannten aliphatischen Monoamino-monocarbonsäuren mit endständigen Amino- bzw. Carboxylgruppen zu den bevorzugten Aminocarbonsäuren. Besonders bevorzugt sind 2-Aminoessigsäure, 6-Aminohexansäure und 12-Aminododecansäure.

Falls die Carboxylgruppen zumindest teilweise durch Mitverwendung von Aminocarbonsäuren in die Copolymerisate eingebaut werden sollen, muß natürlich dafür Sorge getragen werden, daß für die Aminogruppen der Aminocarbonsäuren eine ausreichend hohe Konzentration an Anhydridgruppen zur Verfügung steht. Dies kann beispielsweise dadurch sichergestellt werden, daß die Modifizierung der anhydridfunktionellen Copolymerisate mit den Aminocarbonsäuren vor der Modifizierung mit den Aminoalkoholen unter Einhaltung eines hohen Überschusses an Säureanhydridgruppen zu Aminogruppen der Aminocarbonsäuren durchgeführt wird, oder, bei gleichzeitigem Einsatz der Aminoalkohole und der Aminocarbonsäuren dadurch, daß auf ein Überschuß an Aminogruppen gegenüber Säureanhydridgruppen weitgehend verzichtet wird.

Eine weitere, weniger bevorzugte Möglichkeit Carboxylgruppen in das Polymer einzuzführen, ist eine unvollständige Imidierungsreaktion bei der Umsetzung von Anhydridgruppen mit den Aminoalkoholen, dabei entstehen anteilig Struktureinheiten III.

Solche Struktureinheiten werden z.B. erhalten, wenn man die Imidierungsreaktion vor dem Abspalten der theoretischen Wassermenge abbricht.

Wie bereits ausgeführt, wird die Menge der nach diesen Methoden in die Copolymerisate eingebauten Carboxylgruppen so bemessen, daß die Polymerisate, bezogen auf 100 %iges Harz, Säurezahlen von 15 - 125, vorzugsweise von 20 - 75 aufweisen.

Gemäß einer weiteren Ausbildung des erfindungsgemäßen Verfahrens werden die hydroxyfunktionellen Copolymerisate vor dem Lösen bzw. Dispergieren in Wasser durch Umsetzung mit Lactonen unter Lactonringöffnung und Kettenverlängerung modifiziert.

Geeignete Lactone sind z.B. solche, die 3 bis 15 Kohlenstoffatome im Ring enhalten, wo bie Ringe auch verschiedene Substituenten aufweisen können. Bevorzugte Lactone sind gamma-Butyrolacton, delta-Valerolacton, epsilon-Caprolacton, beta-Hydroxy-beta-methyl-delta-Valerolacton.

Die Lactone können in Mengen von 0,05 - 5,0 Mol, bevorzugt 0,25 - 2,5 Mol Lacton pro Mol Hydroxylgruppen im Polyimidcopolymerisat eingesetzt werden. Die Umsetzung erfolgt z.B. bei 100 - 150°C während 0,5 bis 5 Stunden, wobei gegebenenfalls geeignete Katalysatoren wie z.B. para-Toluolsulfonsäure, Dibutylzinnoxid, Dibutylzinndilaurat in Mengen von 0,01 bis 1,0 % zugesetzt werden können.

Die Modizifierungsreaktion mit den Lactonen kann selbstverständlich auch in Gegenwart der bereits beispielhaft genannten Lösungsmittel durchgeführt werden.

Der nächste Schritt des erfindungsgemäßen Verfahrens besteht darin, die im allgemeinen in organischen Lösungsmittel der oben beispielhaft genannten Art gelösten hydroxyfunktionellen Copolymerisate, gegebenenfalls nach erfolgter Lactonmodifizierung, durch Zugabe eines Neutralisationsmittels zu neutralisieren und in Wasser zu lösen bzw. dispergieren. Das Neutralisationsmittel wird dabei in solchen Mengen eingesetzt, daß 20 - 100, vorzugsweise 35 - 80 % der vorliegenden Carboxylgruppen neutralisiert werden. Die Neutralisation kann vor der Wasserzugabe oder auch gleichzeitig mit der Wasserzugabe unter Verwendung von wäßrigen Lösungen des Neutralisationsmittels erfolgen. Gewünschtenfalls können den Lösungen der Copolymerisate vor der Neutralisation auch noch weitere Lösungsmittel wie z.B. N-Methylpyrrolidon, N,N'-Dimethylpropylenharnstoff, Ethanol, Propanol, Butanol, Pentanol, Hexanol, Methoxybutanol, Diacetanalkohol, Methylglykol, Ethylglykol, Butylglykol, Methyldiglykol, Ethyldiglykol, Butyldiglykol, Propylenglykolmonomethylether, Methoxypropanol, N-Methylcaproplacton oder N,N'-Dimethylimidazolidinon zugegeben werden.

Geeignete Neutralisationsmittel können z.B. sein: Ammoniak, Triethylamin, Diethanolamin, Methyldiethanolamin, 2-Amino-2-mehyl-1-propanol, Dimethylethanolamin, N-Methylmorpholin, Natriumhydroxid oder Kaliumhydroxid.

Die Frage, ob es sich bei den wäßrigen Systemen um (gegebenenfalls Kolloidale) Lösungen oder um Dispersionen handelt hängt vom Molekulargewicht der gelösten bzw. dispergierten Teilchen und insbesondere von ihrem Gehalt an Carboxylatgruppen ab. Vorzugsweise handelt es sich bei den wäßrigen Systemen um Dispersionen.

Im Anschluß an den Löse- bzw. Dispergierschritt wird im allgemeinen das vorliegende organische Lösungsmittel, vorzugsweise azeotrop mit Wasser, abdestilliert. Durch einen Inertgasstrom (z.B. N₂) bzw. durch Anlegen eines leichten Vakuums kann der Destillationsschritt beschleunigt werden. Im allgemeinen wird solange destilliert, bis kein azeotropes Gemisch mehr gebildet wird. Durch Wasserzugabe bzw. Zugabe von weiteren Neutralisationsmitteln wird die wäßrige Lösung bzw. Dispersion auf eine gebrauchsfertige Viskosität verdünnt. Im allgemeinen wird die Gesamtmenge des verwendeten Wassers so gewählt, daß letztendlich 20 - 45 Gew.-%ige Lösungen oder Dispersionen der Copolymerisate resultieren.

Die so hergestellten erfindungsgemäßen Lösungen oder Dispersionen können mit geeigneten, gegenüber Hydroxylgruppen reaktiven Vernetzerharzen zu gebrauchsfertigen Bindemittelgemischen kombiniert werden. Diese Bindemittelgemische bestehen im allgemeinen, bezogen auf Feststoff, aus
- a): 30 - 98, vorzugsweise 60 - 95 Gew.-Teilen erfindungsgemäßen, hydroxylfunktionellen Polyimidcopolymerisaten und
- b): 2 - 70, vorzugsweise 5 - 40 Gew.-Teilen eines oder mehrerer Vernetzterharze.

Die Vernetzerharze b) können wasserverdünnbare bzw. -dispergierbare Susbtanzen darstellen, es ist jedoch auch möglich, als Vernetzerharze hydrophobe, für sich allein im Wasser nicht dispergierbare Substanzen einzusetzen, da die Harze a) die Funktion eines Emulgators für die Vernetzerharze b) übernehmen können.

Geeignete Vernetzerharze b) sind beispielsweise wasserverdünnbare bzw. -dispergierbare Melamin- bzw. Harnstoff-Formaldehyd-Kondensationsprodukte, wie sie z.B. bei D.H. Solomon, The Chemistry of Organic Filmformers, S. 235 ff, John Wiley & Sons, Inc., New York, 1967, beschrieben sind. Die Melaminharze können jedoch auch ganz oder teilweise durch andere vernetzende Aminoplaste, wie sie z.B. in "Methoden der organischen Chemie" (Houben-Weyl),. Bd. 14/2, Teil 2, 4.Auflage, Georg-Thieme-Verlag, Stuttgart 1963, S. 319 ff, beschrieben sind, ersetzt werden.

Ebenfalls geeignete Vernetzerharze sind blockierte Polyisocyanate, beispielsweise auf Basis von Isophorondiisocyanat, Hexamethylendiisocyanat, 1,4-Diisocyanatocyclohexan, Bis-(4-isocyanato-cyclohexyl)-methan, 2,4-Diisocyanato-1-methylbenzol, Bis-(4-isocyanatophenyl)-propan, Tris-(4-isocyanatophenyl)-methan, oder auf Basis von Lackpolyisocyanaten wie Biuretgruppen aufweisenden Polyisocyanaten auf Basis von 1,6-Diisocyanatohexan, Isocyanuratgruppen aufweisenen Polyisocyanaten auf Basis von 1,6-Diisocyanatohexan oder Urethangruppen aufweisenden Lackpolyisocyanaten auf Basis von 2,4-und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebige Gemische derartiger Polyhydroxylverbindungen andererseits. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Lactame wie ε-Caprolactam oder Phenole.

Bevorzugte Vernetzerharze sind Melamin- und Harnstoffharze, insbesondere alkylierte Melamin-Formaldehydharze mit 1 - 8 Kohlenstoffatomen in der Alkylkette wie z.B. butylierte und/oder methoxymethylierte Melaminharze.

Die erfindungsgemäßen wäßrigen Lösungen oder Dispersionen bzw. deren Kombinationen mit den beispielhaft genannten Vernetzerharzen können zur Herstellung von Beschichtungsmitteln, Dichtmassen oder Klebstoffen verwendet werden. Bevorzugtes Einsatzgebiet ist die Herstellung von Beschichtungsmitteln. Die wäßrigen Lösungen oder Dispersionen bzw. ihre Kombinationen mit Vernetzerharzen können gegebenenfalls aus der Lacktechnologie übliche Hilfs- und Zusatzmittel enthalten. In Betracht kommen z.B. übliche Pigmente und Füllstoffe, die in Mengen von beispielsweise 30 - 180 Gew.-%, bezogen auf Bindemittelfeststoff, eingesetzt werden können. Beispielhaft genannt seien Titandioxide, Eisenoxide, Zinkoxide, Calcium- und Magnesiumsilikate, Alumiumbronze, Ruß, Kalk oder organische Farbstoffe bzw. Pigmente wie Azofarbstoffe, Phthalocyaninkomplexe u. dgl. Auch andere, an sich übliche Zusatzstoffe, wie Antioxidantien, Verlaufshilfsmittel, Antischaummittel, UV-Absorber, Antiabsetzmittel u. dgl. können in den Beschichtungsmitteln auf Basis der erfindungsgemäßen wäßrigen Lösungen oder Dispersionen eingesetzt werden.

Beschichtungsmittel, die als Bindemittel-Kombinationen der oben genannten Art aus erfindungswesentlichen hydroxyfunktionellen Copolymerisaten und Vernetzerharzen enthalten, eignen sich zur Beschichtung beliebiger hitzeresistenter Substrate wie beispielsweise Eisen, Stahl, Aluminium, Titan, Magnesium und andere Metalle, Papier- und Kunststoffolien.

Die Verarbeitung der Beschichtungsmittel kann nach den üblichen Technologien erfolgen. Nach Abdampfen bzw. Verdunsten des Wassers resultieren Beschichtungen, die bei 90 bis 180°C zu hochwertigen Lackfilmen ausgehärtet werden können.

In den nachfolgenden Beispielen beziehen sich alle Prozentangaben auf das Gewicht.

### Beispiel 1

a) In einem 5-l-Reaktionsgefäß mit Rühr-, Kühl- und Heizvorrichtung werden unter N₂-Atmosphäre 983 g Solvent Naphta und 983 g Butylacetat vorgelegt und auf 125°C erhitzt. Eine Mischung aus 200 g Maleinsäureanhydrid, 380 g Methylmethacrylat, 600 g Butylacrylat, 140 g Acrylsäure, 400 g 2-Ethylhexylacrylat und 200 g Styrol wird in 3 Stunden und parallel dazu 114 g tert.-Butyl-peroktoat (70 %ig in einem Kohlenwasserstoffgemisch) in 3 1/2 Stunden zudosiert. Nach weiteren 2 Stunden Nachrührzeit erhält man ein etwa 50 %iges carboxyl- und anhydridfunktionelles Copolymerisat mit einem Anhydridäquivalentgewicht von 980 g (100 %ig).
b) In einem 5-l-Reaktionsgefäß mit Rühr-, Kühl- und Heizvorrichtung und einem Wasserabscheider werden unter N₂-Atmosphäre 151,2 g 1-Amino-2-propanol und 585 g Solvent Naphta vorgelegt und auf 140°C erhitzt. 3.600 g der anhydridfunktionellen Copolymerisatlösung werden in 1 Stunde zudosiert. Dann wird für etwa 5 Stunden die Reaktionsmischung bei 140 - 148°C gehalten und dabei das Reaktionswasser abgespalten.
   Anschließend wird die Harzlösung in einem Gemisch aus 60,3 g Dimethylethanolamin und 3.700 g Wasser dispergiert, die organischen Lösemittel werden azeotrop abdestilliert und am Ende der Destillation nochmals 900 g Wasser zugegeben. Man erhält auf diese Weise eine erfindungsgemäße wäßrige Dispersion eines hydroxylfunktionellen Copolymerisats mit einem Feststoffgehalt von 36 % und einer Säurezahl des dispergierten Feststoffs von 56 bei einem Neutralisationsgrad der Carboxylgruppen von 39 % (Neutralisationsgrad = Prozentsatz der Carboxylgruppen, die unter Neutralisation in Carboxylatgruppen überführt worden sind). Der Festkörper enthält 15 % folgender Struktureinheit:

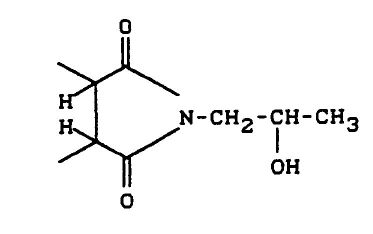

### Beispiel 2

a) In einem 5-l-Reaktionsgefäß mit Rühr-, Kühl- und Heizvorrichtung werden unter N₂-Atmosphäre 983 g Solvent Naphta und 983 g Butylacetat vorgelegt und auf 125°C erhitzt. Eine Mischung aus 300 g Maleinsäureanhydrid, 180 g Methylmethacrylat, 500 g Butylacrylat, 140 g Acrylsäure, 500 g 2-Ethylhexylacrylat und 300 g Styrol wird in 3 Stunden und parallel dazu 114 g tert.-Butyl-peroktoat (70 %ig in einem Kohlenwaserstoffen) in 3 1/2 Stunden zudosiert. Nach weiteren 2 Stunden Rühren bei 125°C erhält man ein etwa 50 %iges carboxyl- und anhydridfunktionelles Copolymerisat mit einem Anhydridäquivalentgewicht von 654 g (100 %ig).
b) In einem 2-l-Reaktionsgefäß mit Rühr-, Kühl- und Heizvorrichtung und einem Wasserabscheider werden 101,2 g 1-Amino-2-propanol und 281 g Solvent Naphta vorgelegt und auf 140°C erhitzt. Bei 140°C werden 1.600 g anhydridfunktionelles Copolymerisat 2 a) in 2 Stunden zudosiert und die Reakionsmischung solange am Wasserabscheider erhitzt, bis das Produkt eine Säurezahl von 54 aufweist.
   Die Harzlösung wird dann in einem Gemisch aus 28,5 g Dimethylethanolamin und 2.500 g Wasser dispergiert und das organische Lösemittel azeotrop abdestilliert.
   Durch Zugabe von Wasser wird ein Festgehalt der wäßrigen Dispersion von 37,5 % eingestellt. Das Polymer hat eine Säurezahl von 54 (100 %ig) bei einem Neutralisationsgrad von 41 %. Der dispergierte Festkörper enthalt 23 % folgender Struktureinheit:

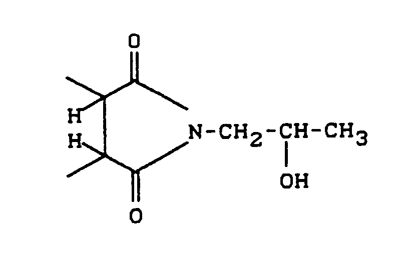

### Beispiel 3

In einem 2-l-Reaktionsgefäß mit Rühr-, Kühl- und Heizvorrichtung werden 54,8 Aminoethanol und 245 g Solvent Naphta vorgelegt und auf 140°C erhitzt. Dann werden 1.600 g des anhydridfunktionellen Copolymerisats 1 a) in einer Stunde zudosiert und die Reaktionsmischung solange am Wasserabscheider erhitzt, bis kein Wasser mehr abgespalten wird. Die Harzlosung wird in einem Gemisch aus 26,8 g Dimethylethanolamin und 1.900 g Wasser dispergiert und dann das organische Lösungsmittel azeotrop abdestilliert . Durch Zugabe von Wasser wird ein Festgehalt der wäßrigen Bindemitteldispersion von 36 % eingestellt. Das Polymer hat eine Säurezahl von 70 (100 %ig) bei einem Neutralisationsgrad von 30 %. Der dispergierte Festkörper enthalt 14 % folgender Struktureinheit:

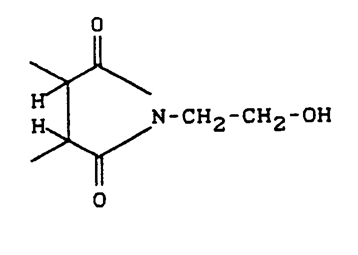

### Beispiel 4

a) In einem 5-l-Reaktionsgefäß mit Rühr-, Kühl- und Heizvorrichtung werden unter N₂-Atmosphäre 1980 g Xylol auf 120°C erhitzt. Eine Mischung aus 230 g Maleinsäureanhydrid, 1120 g Methylmethacrylat, 300 g 2-Ethylhexylacrylat und 300 g Styrol wird in 3 Stunden und parallel dazu 71 g tert.-Butyl-peroktoat (70 %ige Lösung in Kohlenwasserstoffen) in 3 1/2 Stunden zudosiert. Anschließend wird 2 Stunden nachgerührt und man erhält man ein 50 %iges anhydridfunktionelles Copolymerisat mit einem Anhydridäquivalentgewicht von 852 g (100 %ig).
b) In einem 1-l-Reaktionsgefäß mit Rühr-, Kühl- und Heizvorrichtung und einem Wasserabscheider werden 13,8 g 1-Amino-2-propanol, 24,2 g 6-Aminohexansäure und 113,2 g Xylol vorgelegt und auf 132°C erhitzt. 600 g anhydridfunktionelles Copolymerisat 4a) werden in einer Stunde zudosiert und das Reaktionsgemisch solange am Wasserabscheider erhitzt, bis kein Wasser mehr abgespalten wird. Die Harzlösung wird dann in einem Gemisch aus 10,8 g Dimethylethanolamin und 600 g Wasser dispergiert. Das organische Lösemittel wird abdestilliert und die Bindemitteldispersion durch Zugabe von Wasser auf ein Festgehalt von 34 % eingestellt. Das Polymer hat eine Säurezahl von 45 bei einem Neutralisationsgrad von 45 %. Das dispergierte Polymer enhält etwa 8,5 % folgender Struktureinheit:

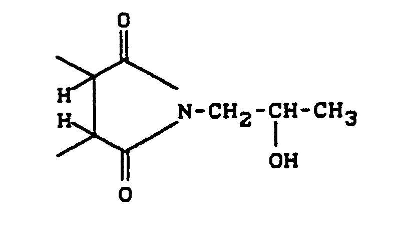

### Beispiel 5

a) In einem 1-l-Reaktionsgefäß mit Rühr-, Kühl- und Heizvorrichtung und einem Wasserabscheider werden unter N₂-Atmosphäre 16,8 g 1-Amino-2-propanol und 65 g Solvent Naphta vorgelegt und auf 120°C erhitzt. Während 1 Stunde werden dann 400 g des anhydrid- und carboxylfunktionellen Copolymerisats aus Beispiel 1) zudosiert, und die Reaktionsmischung solange erhitzt, bis kein Wasser mehr abgespalten wird. Die Polymerlösung wird dann auf 120°C abgekühlt und mit 23,2 g ε-Caprolacton in Gegenwart von 0,24 g Dibutylzinndilaurat während 3 Stunden zur Reaktion gebracht.
   Anschließend wird das Harz in einem Gemisch aus 600 g Wasser und 12 g Dimethylethanolamin dispergiert, das organische Lösemittel abdestilliert und die Polymerdispersion durch Zugabe von Wasser auf einen Festgehalt von 27,5 % eingestellt. Das Polymer hat eine Säurezahl von 55 (100 %ig) bei einem Neutralisationsgrad von 70 %. Der dispergierte Festkörper enthält etwa 23 % folgender Struktureinheiten 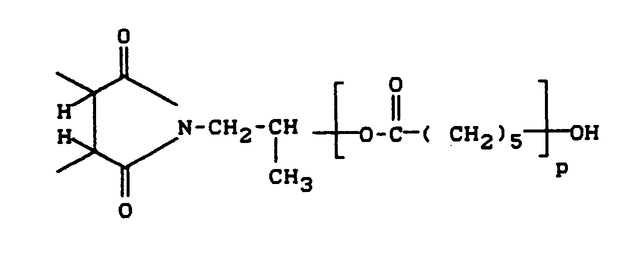 wobei p im statistischen Mittel gleich 1 ist.

### Beispiel 6

a) In einem 2-l-Reaktionsgefäß mit Rühr-, Kühl- und Heizvorrichtung werden 300 g Oxohexylacetat (®Exxate 600) auf 140°C erhitzt. Unter N₂-Atmosphäre wird eine Mischung aus 160 g Maleinsäureanhydrid, 160 g Methylmethacrylat, 208 g Butylacrylat, 80 g 2-Ethylhexylmethacrylat und 160 g Styrol in 3 Stunden und parallel dazu eine Mischung aus 45,9 g tert.-Butyl-peroktoat (70 %ig in einem Kohlenwasserstoffgemisch) und 29 g Oxohexylacetat zudosiert. Nach 2 Stunden Nachrührzeit bei 140°C erhält man ein anhydridfunktionelles Copolymerisat als 70%ige Lösung mit einem Anhydridäquivalentgewicht von 490 g (100 %ig).
b) In einem 0,5-l-Reaktionsgefäß mit Rühr-, Kühl-, Heizvorrichtung und Wasserabscheider werden 88,6 g Oxohexylacetat, 14,4 g 1-Amino-2-propanol und 12,6 g 6-Aminohexansäure bei 130°C vorgelegt und 250 g des anhydridfunktionellen Copolymerisats 6 a) zudosiert. Die Reaktion wird solange durchgeführt, wie kein Wasser mehr abgespalten wird, dann wird das Reaktionsgemisch in einem Gemisch aus 6,3 g Dimethylethanolamin und 360 g Wasser dispergiert. Nachdem das organische Lösemittel azeotrop abdestilliert ist, wird die wäßrige Bindemitteldispersion mit Wasser auf einen Festgehalt von 27 % eingestellt. Das Polymer hat eine Säurezahl von 48 (100 %ig) bei einem Neutralisationsgrad von 50 %. Der dispergierte Festkörper enthält etwa 21 % folgender Struktureinheit:

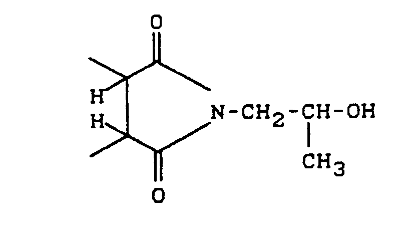

### Beispiel 7

a) In einem 4-l-Reaktionsgefäß mit Rühr-, Kühl- und Heizvorrichtung werden 1.300 g Xylol unter N₂-Atmosphäre auf 120°C erhitzt. Eine Mischung aus 300 g Maleinsäureanhydrid, 600 g Butylacrylat, 420 g 2-Ethylhexylacrylat und 600 g Styrol wird in 3 Stunden und parallel dazu 114 g tert.-Butylperoktoat in 3 1/2 Stunden zudosiert. Nach weiteren 2 Stunden Nachrührzeit erhält man ein etwa 60 %iges anhydridfunktionelles Copolymerisat mit einem Anhydridäquivalentgewicht von 654 g (100 %ig).
b) In einem 1-l-Reaktionsgefäß mit Rühr-, Kühl- und Heizvorrichtung und einem Wasserabscheider werden 29,6 g 1-Amino-2-propanol, 23,6 g 6-Aminohexansäure und 265 g Xylol vorgelegt. 300 g des anhydridfunktionellen Copolymerisats 7a) werden bei 130°C in 1 Stunde zudosiert und die Reaktionsmischung solange erhitzt, bis die Wasserabspaltung beendet ist. Das Harz wird dann in einem Gemisch aus 700 g Wasser und 16 g Dimethylethanolamin dispergiert. Nach dem Abdestillieren des Xylols werden 21 g Butylglykol zugegeben und die Harzdispersion auf einen Festgehalt von 25 % durch Zugabe von Wasser eingestellt. Das Polymer hat eine Säurezahl von 32 (100 %ig) bei einem Neutralisationsgrad von 90 %. Der dispergierte Festkörper enthält 15 % folgender Struktureinheit:

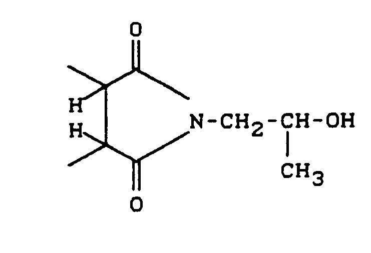

Die nach den Beispielen 1 bis 7 hergestellten Bindemitteldispersionen wurden im Gewichtsverhältnis 80 : 20 (jeweils 100 %ig) mit einem Aminovernetzerharz (Melaminharz ®Sacopal M 232, Krems Chemie) abgemischt und auf entfettete Stahlbleche appliziert. Die Naßfilmstärke betrug 180 µm, die Trockenfilmstärke ca. 25 bis 30 µm. Nach 10 Minuten Ablüften bei Raumtemperatur wurden die Überzüge für 30 Minuten bei 150°C eingebrannt. Nach dem Abkühlen erhielt man klare, harte, vernetzte Filme. Alle Überzüge überstanden einen Wischtest mit einem mit Methylisobutylketon getränkten Wattebausch (mindestens 200 Doppelhübe) ohne Befund.

## Patentansprüche

1. Wäßrige Lösungen oder Dispersionen von hydroxyfunktionellen Copolymerisaten mit Imidstruktureinheiten, dadurch gekennzeichnet, daß in den Copolymerisaten pro 100 Gew.-Teilen
a) 1 - 70 Gew.-Teile an chemisch eingebauten Strukturheiten I 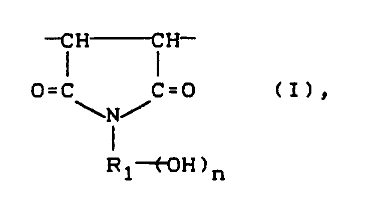
b) insgesamt 2 - 25 Gew.-Teile an chemisch eingebauten, zumindest teilweise in neutralisierter Form vorliegenden Struktureinheiten II und/oder III und/oder IV und/oder V 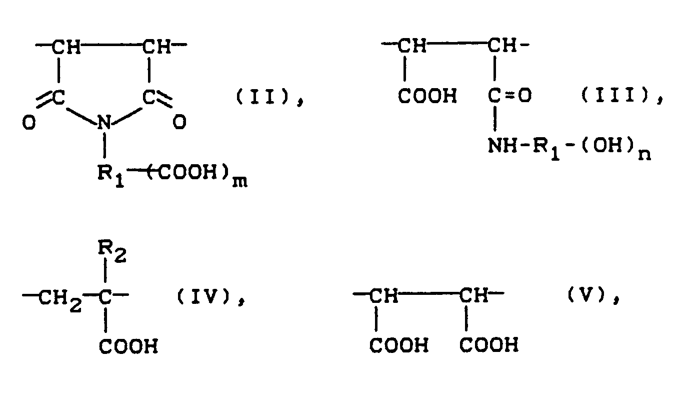
c) 1 - 75 Gew.-Teile an chemisch eingebauten Struktureinheiten der Formel (VI) 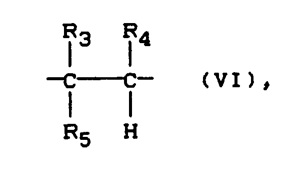 sowie
d) 15 - 95 Gew.-Teile an chemisch eingebauten Struktureinheiten (VII) 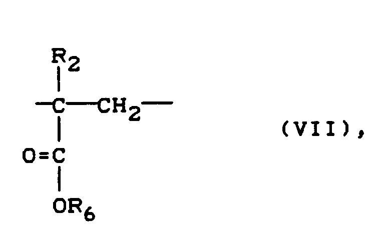
e) 0 - 15 Gew.-Teile an anderen, von mehrfach olefinisch ungesättigten Monomeren herrührenden Struktureinheiten
vorliegen, wobei die Summe der genannten Gewichtsteile 100 beträgt, und wobei
n für 1, 2 oder 3 steht,
m für 1 oder 2 steht,
R₁ für aliphatische, cycloaliphatische, araliphatische, aromatische Kohlenwasserstoffreste mit 2 bis 20 Kohlenstoffatomen steht, die ein oder mehrere Heteroatome aus der Gruppe bestehend aus Sauerstoff und Stickstoff in Form von z.B. Ether-, Ester-, Amid-, Imid-, Urethan-, Harnstoff-, Keto-, Nitrilgruppen und darüber hinaus auch Fluor und Chlor enthalten können.
R₂ für Wasserstoff oder eine Methylgruppe steht,
R₃ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen steht, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält,
R₄ für Wasserstoff, oder zusammen mit R₃ und den beiden C-Atomen der Struktureinheiten VI für einen cycloaliphatischen Rest steht,
R₅ für Wasserstoff, eine Methyl- oder Ethylgruppe oder für Chlor oder Fluor steht,
R₆ für einen aliphatischen oder cycloaliphatischen gegebenenfalls Sauerstoff, Schwefel oder Stickstoff als Heteroatom enthaltenden Kohlenwasserstoffrest mit 1 bis 18 Kohlenstoffatomen steht.

2. Wäßrige Lösungen oder Dispersionen von Copolymerisaten gemäß Anspruch 1, dadurch gekennzeichnet, daß in den Copolymerisaten pro 100 Gew.-Teilen
a) 8 - 35 Gew.-Teile an chemisch eingebauten Struktureinheiten I
b) insgesamt 3 - 15 Gew.-Teile an chemisch eingebauten, zumindest teilweise in neutralisierter Form vorliegenden Struktureinheiten II und/oder III und/oder IV und/oder V,
c) 5 - 50 Gew.-Teile an chemisch eingebauten Struktureinheiten VI sowie
d) 20 - 80 Gew.-Teile an chemisch eingebauten Struktureinheiten VII vorliegen, wobei die Summe dieser Gewichtsteile 100 ergibt, und wobei
n für 1, 2 oder 3 steht,
m für 1 steht,
R₁ für einen aliphatischen, gegebenenfalls Estergruppen aufweisenden Kohlenwasserstoffrest mit insgesamt 2 bis 12 Kohlenstoffatomen steht,
R₂ für Wasserstoff oder eine Methylgruppe steht,
R₃ für einen gegebenenfalls substituierten Phenylrest steht,
R₄ für Wasserstoff steht,
R₅ für Wasserstoff oder eine Methylgruppe steht,
R₆ für einen aliphatischen, gegebenenfalls Sauerstoff als Heteroatom enthaltenden Kohlenwasserstoffrest mit 1 bis 10 Kohlenstoffatomen steht.

3. Wäßrige Lösungen oder Dispersionen von Copolymerisaten gemäß Anspruch 2, dadurch gekennzeichnet, daß in den Copolymerisaten pro 100 Gew.-Teilen
a) 8 - 35 Gew.-Teile an chemisch eingebauten Struktureinheiten der Formel Ia 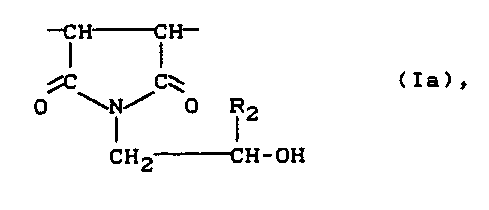
b) 3 - 15 Gew.-Teile an chemisch eingebauten, zumindest teilweise in neutralisierter Form vorliegenden Struktureinheiten der Formeln IIa und/oder IV 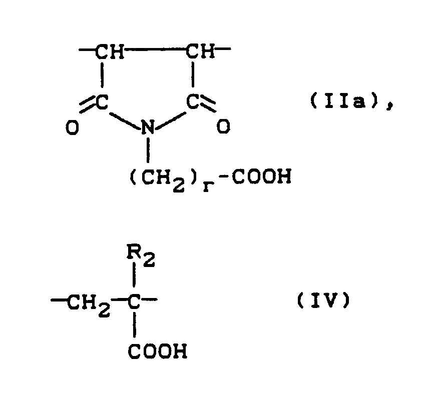
c) 5 - 50 Gew.- Teile an chemisch eingebauten Struktureinheiten VIa 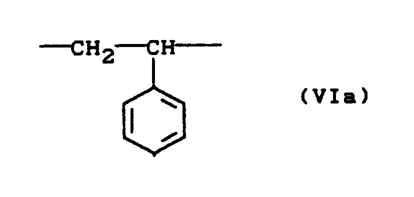 sowie
d) 20 - 80 Gew.-Teile an chemisch eingebauten Struktureinheiten der Formel VII
vorliegen, wobei die Summe dieser Gewichtsteile 100 ergibt, und wobei
R₂ und R₆ die in Anspruch 2 genannte Bedeutung haben und
r für eine ganze Zahl von 2 bis 12 steht.

4. Wäßrige Lösungen oder Dispersionen von Copolymerisaten gemäß Anspruch 1 bis 3, dadurch gekennzeichnet, daß die gelösten bzw. dispergierten Copolymerisate ein Molekulargewicht Mn von 2.600 bis 10.000 und Säurezahlen, bezogen auf neutralisierte und unneutralisierte Carboxylgruppen, von 20 - 75 bei einem Neutralisationsgrad der Carboxylgruppen von 30 - 80 % aufweisen.

5. Verfahren zur Herstellung von wäßrigen Lösungen oder Dispersionen von hydroxyfunktionellen Copolymerisaten mit Imidstruktureinheiten gemäß Anspruch 1, dadurch gekennzeichnet, daß man, den hydroxyfunktionellen Copolymerisaten entsprechende, anhydrid- und gegebenenfalls carboxylfunktionelle Copolymerisate mit Aminoalkoholen der Formel VIII
H₂N-R₁-(OH)ₙ (VIII),
und gegebenenfalls mit Aminocarbonsäuren der Formel
H₂N-R₁(COOH)ₘ (IX),
wobei R₁, n und m die in Anspruch 1 genannte Bedeutung haben,
unter Einhaltung eines Äquivalentverhältnisses von Aminogruppen zur Anhydridgruppen von 0,8:1 bis 2:1 unter Imidbildung bei 100 bis 200°C zur Reaktion bringt, gleichzeitig und/oder anschließend das Reaktionswasser azeotrop abdestilliert, die Polymerlösung nach und/oder unter gleichzeitiger, mindestens teilweiser Neutralisation der Carboxylgruppen in Wasser löst oder dispergiert und dann gegebenenfalls noch vorliegendes organisches Lösungsmittel teilweise oder ganz azeotrop abdestilliert.

6. Verfahren gemäß Anspruch 5, dadurch gekennzeichnet, daß man Aminoalkohole VIII mit einem Molekulargewicht von mindestens 61 sowie gegebenenfalls Aminocarbonsäuren IX zusammen mit Lösungsmittel vorlegt, auf Temperaturen von mindestens 100°C erhitzt, das gelöste anhydrid- und gegebenenfalls carboxylfunktionelle Copolymerisat zudosiert, das Reaktionswasser abdestilliert bis das Produkt eine Säurezahl von 20 bis 75 aufweist, dann das Reaktionsgemisch in einem Wasser-/Neutralisationsmittelgemisch dispergiert und das organische Lösemittel azeotrop abdestilliert.

7. Verfahren gemäß den Ansprüchen 5 und 6, dadurch gekennzeichnet, daß man als Aminoalkohol VII 2-Amino-1-ethanol, 2-Amino-1-propanol, 3-Amino-1-propanol, 1-Amino-2-propanol, sowie als gegebenenfalls einzusetzende Aminocarbonsäure IX, 6-Aminohexansäure, 2-Aminoessigsäure, 12-Aminododecansäure verwendet.

8. Weitere Ausbildung der Verfahren gemäß Ansprüchen 5 bis 7, dadurch gekennzeichnet, daß man die durch Umsetzung der anhydrid- und gegebenenfalls carboxylfunktionellen Copolymerisate mit den Aminoalkoholen und gegebenenfalls Aminocarbonsäuren erhaltenen hydroxyfunktionellen Polyimidcopolymerisate vor dem Lösen oder Dispergieren durch Umsetzung mit 0,05 bis 5 Mol an Lactonen pro Mol an in den Polyimidcopolymerisaten vorliegenden Hydroxylgruppen unter ringöffnender Esterbildung modifiziert.

9. Verwendung der in Wasser gelöst oder dispergiert vorliegenden hydroxyfunktionellen Copolymerisate gemäß Anspruch 1 bis 4 zur Herstellung von Beschichtungsmitteln, Dichtmassen oder Klebstoffen.

## Claims

1. Aqueous solutions or dispersions of hydroxyfunctional copolymers containing imide structural units, characterized in that the copolymers contain per 100 parts by weight
a) 1 to 70 parts by weight of chemically incorporated structural units I 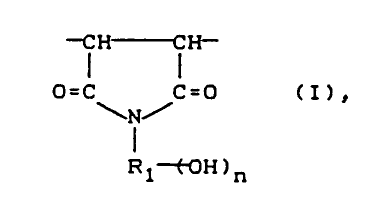
b) a total of 2 to 25 parts by weight of chemically incorporated structural units II and/or III and/or IV and/or V at least partly present in neutralized form 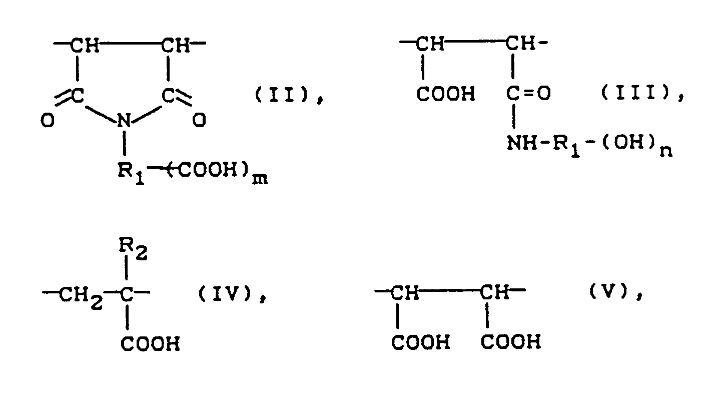
c) 1 to 75 parts by weight of chemically incorporated structual units corresponding to formula (VI) 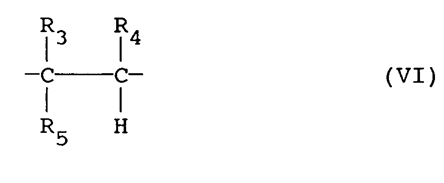 and
d) 15 to 95 parts by weight of chemically incorporated structural units (VII) 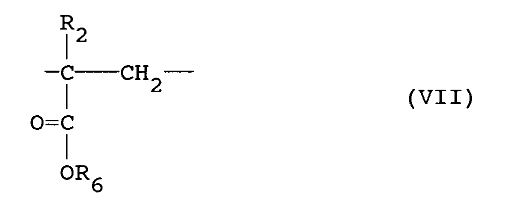
e) 0 to 15 and preferably 0 to 5 parts by weight of other structural units emanating from polyolefinically unsaturated monomers,
the sum total of the parts by weight mentioned being 100; in the above formulae,
n = 1, 2 or 3,
m = 1 or 2,
R₁ = aliphatic, cycloaliphatic, araliphatic, aromatic C₂₋₂₀ hydrocarbon radicals which may contain one or more heteroatoms from the group consisting of oxygen and nitrogen in the form of, for example, ether, ester, amide, imide, urethane, urea, keto, nitrile groups and, in addition, fluorine and chlorine,
R₂ = hydrogen or a methyl group,
R₃ = an aliphatic C₂₋₁₅ hydrocarbon radical, a cycloaliphatic C₅₋₁₀ hydrocarbon radical, an araliphatic C₇₋₁₈ hydrocarbon radical, an aromatic C₆₋₁₂ hydrocarbon radical, chlorine, fluorine, a nitro group or a C₂₋₁₈ hydrocarbon radical containing one or more heteroatoms from the group consisting of oxygen, sulfur and nitrogen in the form of ether, ester, amide, urethane, urea, thioester, thioether, oxirane, ketone, lactam or lactone groups,
R₄ = hydrogen or, together with R₃ and the two carbon atoms of the structural units VI a cycloaliphatic radical,
R₅ = hydrogen, a methyl or ethyl group of chlorine or fluorine,
R₆ = an aliphatic or cycloaliphatic C₁₋₁₈ hydrocarbon radical optionally containing oxygen, sulfur or nitrogen as heteroatoms.

2. Aqueous solutions of dispersions of copolymers as claimed in claim 1, characterized in that the copolymers contain per 100 parts by weight
a) 8 to 35 parts by weight of chemically incorporated structural units I,
b) a total of 3 to 15 parts by weight of chemically incorporated structural units II and/or III and/or IV and/or V at least partly present in neutralized form,
c) 5 to 50 parts by weight of chemically incorporated structural units VI and
d) 20 to 80 parts by weight of chemically incorporated structural units VII,
the sum total of these parts by weight being 100 and
n = 1, 2 or 3,
m = 1,
R₁ = an aliphatic c₂₋₁₂ hydrocarbon radical optionally containing ester groups,
R₂ = hydrogen or a methyl group,
R₃ = an optionally substituted phenyl radical,
R₄ = hydrogen,
R₅ = hydrogen or a methyl group,
R₆ = an aliphatic C₁₋₁₀ hydrocarbon radical optionally containing oxygen as heteroatom.

3. Aqueous solutions or dispersions of copolymers as claimed in claim 2, characterized in that the copolymers contain per 100 parts by weight
a) 8 to 35 parts by weight of chemically incorporated structural units corresponding to formula Ia 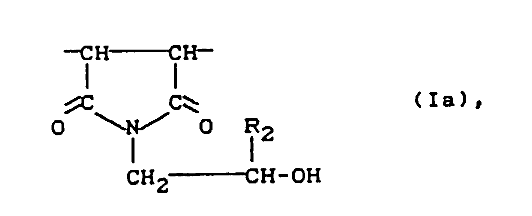
b) 3 to 15 parts by weight of chemically incorporated structural units of formulae IIa and/or IV at least partly present in neutralized form 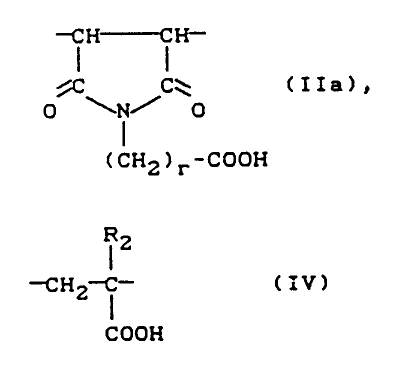
c) 5 to 50 parts by weight of chemically incorporated structural units VIa 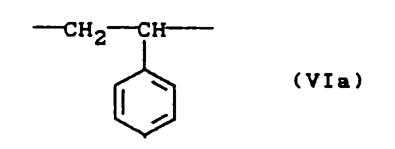 and
d) 20 to 80 parts by weight of chemically incorporated structural units corresponding to formula VII above,
R₂ and R₆ having the meanings defined in claim 2 and
r being an integer of 2 to 12.

4. Aqueous solutions or dispersions of copolymers as claimed in claims 1 to 3, characterized in that the dissolved or dispersed copolymers have a molecular weight Mn of 2,600 to 10,000 and acid values, based on neutralized and unneutralized carboxyl groups, of 20 to 75 for a degree of neutralization of the carboxyl groups of 30 to 80%.

5. A process for the production of the aqueous solutions or dispersions of hydroxyfunctional copolymers containing imide structural units claimed in claim 1, characterized in that anhydride-functional and optionally carboxyl-functional copolymers corresponding to the hydroxyfunctional copolymers are reacted with aminoalcohols corresponding to formula VIII
H₂N-R₁-(OH)ₙ (VIII)
and optionally with aminocarboxylic acids corresponding to formula IX)
H₂N-R₁(COOH)ₘ (IX)
in which R₁, n and m are as defined above,
at a temperature in the range from 100 to 200°C, an equivalent ratio of amino groups to anhydride groups of 0.8:1 to 2:1 being maintained during the reaction, the water of reaction is azeotropically distilled off at the same time and/or afterwards, the polymer solution is dissolved or dispersed in water after and/or during at least partial neutralization of the carboxyl groups and any organic solvent still present is then distilled off completely or in part.

6. A process as claimed in claim 5, characterized in that aminoalcohols VIII having a molecular weight of at least 61 and, optionally, aminocarboxylic acids IX are initially introduced together with solvent, heated to temperatures of at least 100°C, the dissolved anhydride-functional and, optionally, carboxyl-functional copolymer is added, the water of reaction is distilled off until the product has an acid value of 20 to 75, the reaction mixture is then dispersed in a mixture of water and neutralizing agent and the organic solvent is azeotropically distilled off.

7. A process as claimed in claims 5 and 6, characterized in that 2-amino-1-ethanol, 2-amino-1-propanol, 3-amino-1-propanol, 1-amino-2-propanol is used as the aminoalcohol VII while 6-aminohexanoic acid, 2-aminoacetic acid, 12-aminododecanoic acid is used as the optional aminocarboxylic acid IX.

8. A further development of the process claimed in claims 5 to 7, characterized in that the hydroxyfunctional polyimide copolymers obtained by reaction of the anhydridefunctional and, optionally, carboxyl-functional copolymers with the aminoalcohols and, optionally, aminocarboxylic acids are modified before dissolution or dispersion by reaction with 0.05 to 5 mol lactones per mol hydroxyl groups present in the polyimide copolymers with ring-opening ester formation.

9. The use of the hydroxyfunctional copolymers claimed in claims 1 to 4 dissolved or dispersed in water for the production of coating compounds, sealing compounds or adhesives.

## Revendications

1. Solutions ou dispersions aqueuses de copolymères hydroxy-fonctionnels contenant des unités de structure d'imide, caractérisées en ce que, dans les copolymères, par 100 parties en poids, sont présentes
a) 1-70 parties en poids d'unités de structure I incorporées par voie chimique 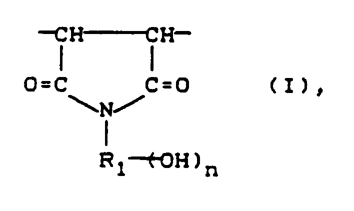
b) au total, 2-25 parties en poids d'unités de structure II et/ou III et/ou IV et/ou V présentes au moins partiellement sous forme neutralisée, incorporées par voie chimique 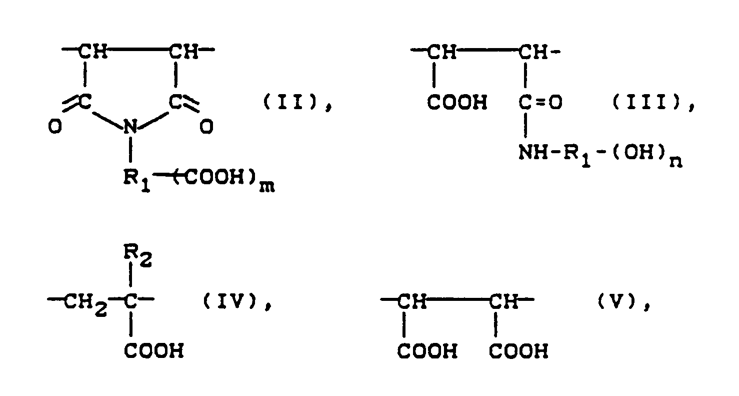
c) 1-75 parties en poids d'unités de structure de formule VI incorporées par voie chimique 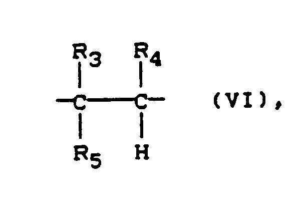 ainsi que
d) 15-95 parties en poids d'unités de structure VII incorporées par voie chimique 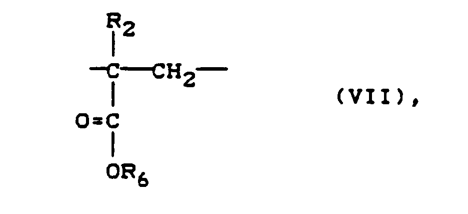
e) 0-15 parties en poids d'autres unités de structure provenant de monomères plusieurs fois insaturés par voie oléfinique
dans lesquelles la somme des parties en poids mentionnées s'élève à 100, et dans lesquelles
n représente 1, 2 ou 3,
m représente 1 ou 2,
R₁ représente des radicaux d'hydrocarbures aliphatiques, cycloaliphatiques, araliphatiques, aromatiques contenant de 2 à 20 atomes de carbone, qui peuvent contenir un ou plusieurs hétéroatomes choisis parmi le groupe constitué par un atome d'oxygène et par un atome d'azote sous forme, par exemple de groupes éther, ester, amide, imide, uréthanne, urée, cétone, nitrile, et en outre un atome de fluor et un atome de chlore,
R₂ représente un atome d'hydrogène ou un groupe méthyle
R₃ représente un radical d'hydrocarbure aliphatique contenant de 2 à 15 atomes de carbone, un radical d'hydrocarbure cycloaliphatique contenant de 5 à 10 atomes de carbone, un radical d'hydrocarbure araliphatique contenant de 7 à 18 atomes de carbone, un radical d'hydrocarbure aromatique contenant de 6 à 12 atomes de carbone, un atome de chlore, un atome de fluor, un groupe nitrile ou encore un radical d'hydrocarbure contenant de 2 à 18 atomes de carbone, qui contient un ou plusieurs hétéro-atomes choisis parmi le groupe constitué par un atome d'oxygène, par un atome de soufre et par un atome d'azote sous forme de groupes éther, ester, amide, uréthanne, urée, thioester, thioéther, oxiranne, cétone, lactame ou lactone,
R₄ représente un atome d'hydrogène, ou représente ensemble avec R₃ et les deux atomes de carbone des unités de structure VI, un radical cycloaliphatique,
R₅ représente un atome d'hydrogène, un groupe méthyle ou un groupe éthyle ou encore un atome de chlore ou un atome de fluor,
R₆ représente un radical d'hydrocarbure aliphatique ou cycloaliphatique contenant de 1 à 18 atomes de carbone, contenant éventuellement comme hétéroatome un atome d'oxygène, un atome de soufre ou un atome d'azote.

2. Solutions ou dispersions aqueuses de copolymères selon la revendication 1, caractérisées en ce que, dans les copolymères, par 100 parties en poids, sont présentes
a) 8-35 parties en poids d'unités de structure I incorporées par voie chimique,
b) au total 3-15 parties en poids d'unités de structure II et/ou III et/ou IV et/ou V présentes au moins partiellement sous forme neutralisée, incorporées par voie chimique,
c) 5-50 parties en poids d'unités de structure VI incorporées par voie chimique, ainsi que
d) 20-80 parties en poids d'unités de structure VII incorporées par voie chimique,
dans lesquelles la somme de ces parties en poids donne 100, et dans lesquelles
n représente 1, 2 ou 3,
m représente 1,
R₁ représente un radical d'hydrocarbure aliphatique contenant au total de 2 à 12 atomes de carbone, présentant éventuellement des groupes ester,
R₂ représente un atome d'hydrogène ou un groupe méthyle,
R₃ représente un radical phényle éventuellement substitué,
R₄ représente un atome d'hydrogène,
R₅ représente un atome d'hydrogène ou un groupe méthyle,
R₆ représente un radical d'hydrocarbure aliphatique contenant de 1 à 10 atomes de carbone, contenant éventuellement un atome d'oxygène comme hétéroatome.

3. Solutions ou dispersions aqueuses de copolymères selon la revendication 2, caractérisées en ce que, dans les copolymères, par 100 parties en poids, sont présentes
a) 8-35 parties en poids d'unités de structure de formule Ia incorporées par voie chimique 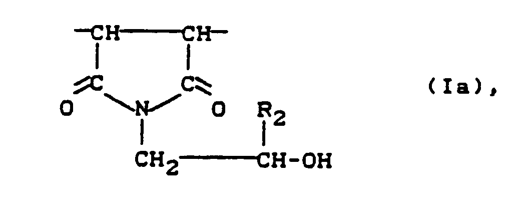
b) 3-15 parties en poids d'unités de structure des formules IIa et/ou IV présentes au moins partiellement sous forme neutralisée, incorporées par voie chimique 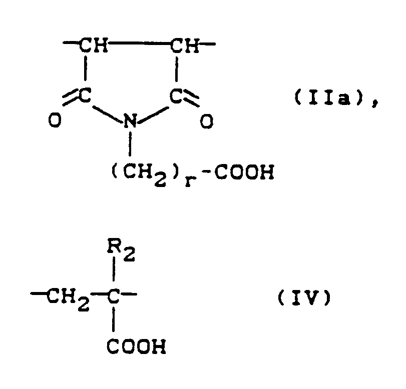
c) 5-50 parties en poids d'unités de structure VIa incorporées par voie chimique 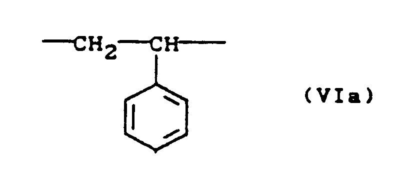 ainsi que
d) 20-80 parties en poids d'unités de structure de formule VII incorporées par voie chimique
dans lesquelles la somme de ces parties en poids donne 100, et dans lesquelles
R₂ et R₆ ont la signification mentionnée à la revendication 2, et
r représente un nombre entier de 2 à 12.

4. Solutions ou dispersions aqueuses de copolymères selon les revendications 1 à 3, caractérisées en ce que les copolymères dissous, respectivement dispersés, présentent un poids moléculaire Mn de 2.600 à 10.000 et des indices d'acide, rapportés aux groupes carboxyle neutralisés et non neutralisés, de 20-75 à un degré de neutralisation des groupes carboxyle de 30-80%.

5. Procédé pour la préparation de solutions ou de dispersions aqueuses de copolymères hydroxy-fonctionnels contenant des unités de structure d'imide selon la revendication 1, caractérisé en ce qu'on fait réagir à une température de 100 à 200°C des copolymères à fonctionnalité anhydride et éventuellement carboxyle, correspondant aux copolymères hydroxy-fonctionnels, avec des amino-alcools de formule VIII
H₂N-R₁-(OH)ₙ (VIII)
et éventuellement avec des acides aminocarboxyliques de formule IX
H₂N-R₁(COOH)ₘ (IX)
où R₁, n et m ont la signification mentionnée dans la revendication 1,
tout en maintenant un rapport d'équivalent des groupes amino aux groupes anhydrides de 0,8:1 à 2:1 avec formation d'imide, on sépare simultanément et/ou ultérieurement l'eau réactionnelle par distillation azéotrope, on dissout ou on disperse dans de l'eau la solution de polymère après neutralisation au moins partielle des groupes carboxyle et/ou en procédant simultanément à cette neutralisation au moins partielle et ensuite, on sépare partiellement ou totalement par distillation azéotrope le solvant organique éventuellement encore présent.

6. Procédé selon la revendication 5, caractérisé en ce qu'on dépose au préalable des amino-alcools VIII ayant un poids moléculaire d'au moins 61 et éventuellement des acides aminocarboxyliques IX conjointement avec un solvant, on chauffe à des températures d'au moins 100°C, on procède à l'addition dosée du copolymère dissous à fonctionnalité anhydride et éventuellement carboxyle, on sépare l'eau réactionnelle par distillation jusqu'à ce que le produit présente un indice d'acide de 20 à 75, puis on disperse le mélange réactionnel dans un mélange eau/agent de neutralisation et on élimine le solvant organique par distillation azéotrope.

7. Procédé selon les revendication 5 et 6, caractérisé en ce qu'on utilise, comme amino-alcool VII le 2-amino-1-éthanol, le 2-amino-1-propanol, le 3-amino-1-propanol, le 1-amino-2-propanol ainsi que, comme acides aminocarboxyliques IX à mettre éventuellement en oeuvre, l'acide 6-aminohexanoïque, l'acide 2-aminoacétique, l'acide 12-aminododécanoïque.

8. Réalisation ultérieure du procédé selon les revendications 5 à 7, caractérisée en ce qu'on modifie les copolymères hydroxy-fonctionnels de polyimide obtenus par la mise en réaction des copolymères à fonctionnalité anhydride et éventuellement carboxyle avec les amino-alcools et éventuellement des acides aminocarboxyliques, avant la solution ou la mise en dispersion, par mise en réaction avec 0,05 à 5 moles de lactones par mole de groupes hydroxyle présents dans les copolymères de polyimide, avec estérification à ouverture de cycle.

9. Utilisation des copolymères hydroxy-fonctionnels selon les revendications 1 à 4, présents sous forme dissoute ou dispersée dans de l'eau, pour la préparation d'agents d'enduction, de matières d'étanchéification ou d'adhésifs.
